# EUROPEAN PATENT APPLICATION

(11) **EP 4 538 527 A1**
(43) Date of publication of application: **16.04.2025**
(21) Application number: 24178120.2
(22) Date of filing: 26.05.2024
(51) Int. Cl.: F03D 9/00, F03D 80/00, G01S 7/38, H04K 3/00

(54) **A WIND POWER PLANT CONFIGURED TO ENABLE AN ELECTRONIC WARFARE SYSTEM TO BE MOUNTED TO SAID WIND POWER PLANT**

(30) Priority: 15.10.2023 SE 2330460
(71) Applicant: Elevated Launch AB, 43169 Mölndal (SE)
(72) Inventor: Norström, Markus, 43169 Mölndal (SE); Sandstedt, Jonas, 44165 Alingsås (SE)

(57) **Abstract**

The present disclosure relates to a wind power plant (100) comprising a nacelle (101) and a wind power plant tower (102) onto which the nacelle (101) is mounted. The wind power plant (100) comprises wind power plant interface means (103) adapted to cooperate with corresponding electronic warfare, EW, system interface means (104), comprised in an EW system (110; 110a, 110b, 110c). The wind power plant interface means (103) are adapted to provide transfer of at least one of communication and electric power between the wind power plant (100) and an EW system (110; 110a, 110b, 110c).

## Description

### TECHNICAL FIELD

The present disclosure relates to electronic warfare system, and in particular to versatile and cost-effective electronic warfare system.

### BACKGROUND

The geopolitical situation today spurs a reinforcement of military defense systems whereof electronic warfare such as active and passive sensors and so-called soft-kill systems are important parts. It is desirable to multiply the number of electronic warfare installations to provide a higher information density and a less vulnerable system.

Today most electronic warfare systems are either land-based on masts, trucks or based on aircrafts or naval vessels. The land-based systems are less flexible and normally has a short range due to their position. The aircraft and vessel-based electronic warfare systems are more flexible and has longer range but are very costly and labor-intense to operate. Moreover, the time to deploy new fixed land-based electronic warfare systems is very lengthy due to e.g. permitting processes, civil work, erection of masts and arranging of secure electricity supply and communication systems. Equally it takes time to deploy systems on vessels and aircrafts since the lead-time to build them and adapt them to the electronic warfare system is long.

It is therefore desired to provide a solution where electronic warfare systems can be deployed without the without permanent operation personnel on site, co-located with planned or existing physical infrastructure, communication infrastructure and electricity supply, in areas close to the perimeter of the protected territory, for instance on the coastline or even far out in the sea to provide additional capacity in a geographically advanced new defense line. Placement of electronic warfare systems, including radar units, active and passive sensors, soft-kill systems in elevated positions would enhance detection, response and interception of signals, communications and incoming threats as e.g., military aircrafts, missiles, UAVs or naval vessels from an antagonist. Early interception is a key to have time for a good judgment of incoming information and also to make a correct response.

It is therefore desired to provide means for accommodating an electronic warfare system in a strategically efficient, versatile and cost-effective manner.

### SUMMARY

The object of the present disclosure is to provide means for accommodating an electronic warfare system in a strategically efficient, versatile and cost-effective manner.

This object is obtained by means of a wind power plant comprising a nacelle and a wind power plant tower onto which the nacelle is mounted. The wind power plant comprises wind power plant interface means adapted to co-operate with corresponding electronic warfare (EW) system interface means, comprised in an EW system. The wind power plant interface means are adapted to provide transfer of at least one of communication and electric power between the wind power plant and an EW system.

This object is also obtained by means of an electronic warfare (EW) system comprising a system control unit and means for transmitting at least one of jamming radio signals, high-power microwaves and laser. The EW system comprises EW system interface means adapted to co-operate with corresponding wind power plant interface means comprised in a wind power plant. The EW system interface means are adapted to provide transfer of at least one of communication and electric power between the EW system and a wind power plant.

By being able to use the wind power plant as a host for EW systems and associated technical systems, wind power installations can become a strategic asset to a military defense, offering permanent installations for surveillance, detection and interception of threats. The wind power plant is prepared for mounting of an EW system, such that one or more EW systems can be mounted to a wind power plant when, and if, deemed suitable.

The co-location of wind power and EW system helps to solve the conflict of interest and instead creates synergies both in function as well as in lowering the total cost for upholding the functions of military defense and electricity production. The total cost for upholding both functions is reduced by sharing the same establishment, physical constructions, communication, and utility systems.

According to some aspects, the wind power plant further comprises a plant communication unit that is adapted for transfer of data to and from a remote server. When the plant communication unit is connected to the wind power plant interface means, a connected EW system is enabled to communicate with the remote server via the plant communication unit.

According to some aspects, the wind power plant further comprises a plant control unit and a radar system that is adapted to provide radar target data to the plant control unit. Suitably, the radar system is positioned at an elevated position, such as at the wind power plant nacelle. Such an elevated and advanced position of the radar system will make early detection possible and give extra time for decision making or an early response using a connected EW system.

This object is also achieved by means of EW systems, defense arrangements, defense systems and methods that are associated with the above advantages.

### BRIEF DESCRIPTION OF THE DRAWINGS

The present disclosure will now be described more in detail with reference to the appended drawings, where:
- Figure 1: shows a schematic perspective front view of a wind power plant with EW systems;
- Figure 2: shows a schematic perspective top view of a wind power plant nacelle with an EW system;
- Figure 3: shows a schematic illustration of an EW system;
- Figure 4: shows a schematic top view of a defense system;
- Figure 5: shows a flowchart illustrating methods according to the present disclosure;
- Figure 6: schematically illustrates a control unit arrangement; and
- Figure 7: schematically illustrates a computer program product.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

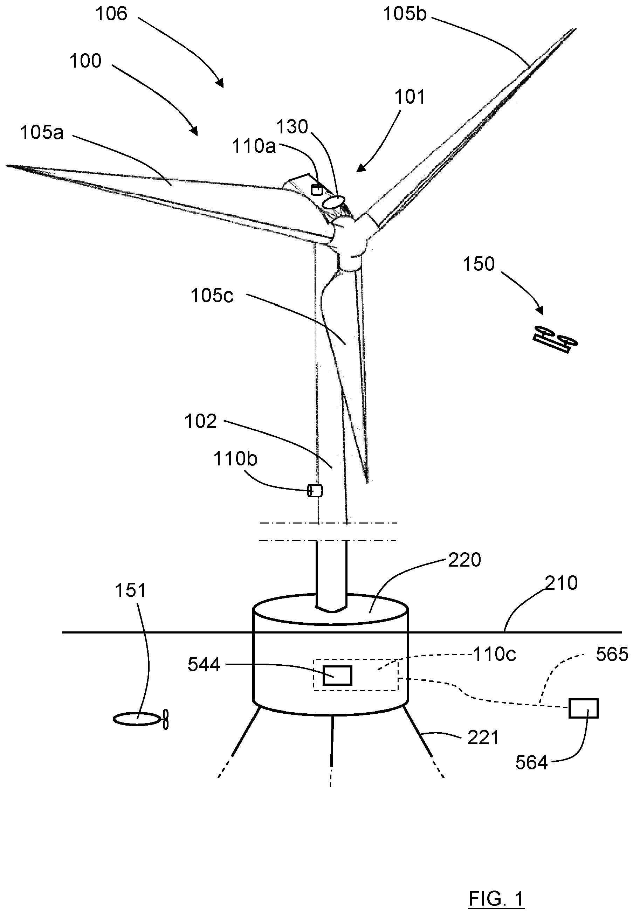

Figure 1 shows a perspective view of wind power plant 100 comprising a wind power plant nacelle 101 mounted to a wind power plant tower 102, the wind power plant nacelle 101 that may be equipped with wind turbine blades 105a, 105b, 105c.

Wind power is an increasingly popular way to generate electricity since it has a competitive cost and very small climate change effect compared to most other energy sources. In many parts of the world, wind power is deployed in large scale, often close to the coastline or in off-shore wind energy parks, far out at sea, in order to get windy conditions. The rapid deployment of wind power and other fossil sources of electricity being phased out is one of the most important means to combat climate change and is forecasted to grow exponentially in the coming decades. Today, wind power is however considered to disturb the ability to uphold a strong military defense. One main reason being that a wind energy park reduces the visibility for existing radar systems, especially for items close to the ground or sea level like low flying objects and naval vessels. This could lead to late detection of incoming threats and has led to a conflict between defense interests and the interest to generate renewable energy and to reduce climate change, both being paramount goals of society.

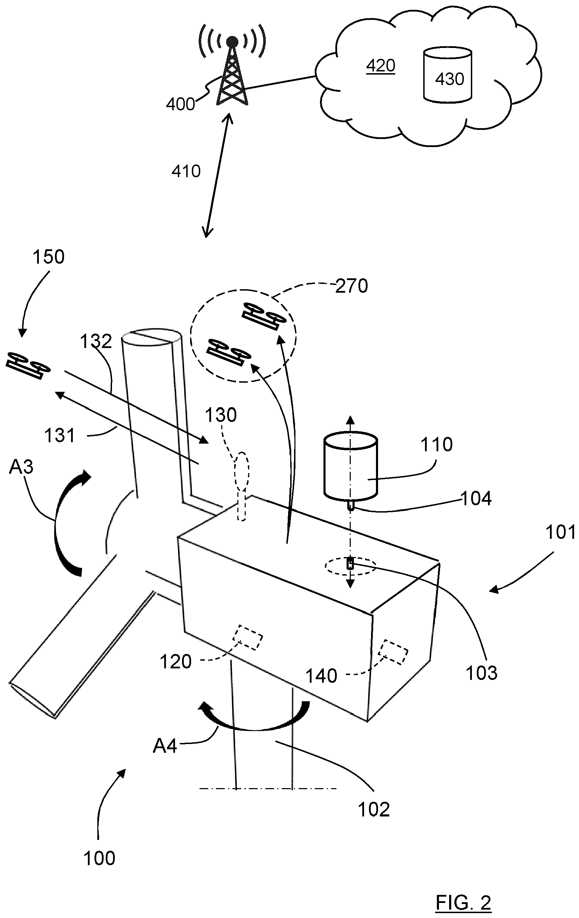

According to the present disclosure, with reference also to Figure 2 that shows a detailed perspective view of the wind power plant nacelle 101, the wind power plant 100 comprises wind power plant interface means 103 adapted to co-operate with corresponding electronic warfare (EW) system interface means 104, comprised in an EW system 110; 110a, 110b, 110c, the wind power plant interface means 103 being adapted to provide transfer of at least one of communication and electric power between the wind power plant 100 and an EW system 110; 110a, 110b, 110c. According to some aspects, such an EW system comprises means 530, 531, 532 for transmitting at least one of jamming radio signals, high-power microwaves and laser.

Correspondingly, the present disclosure also relates to an EW system 110; 110a, 110b, 110c comprising a system control unit 520 and means 530, 531, 532 for transmitting at least one of jamming radio signals, high-power microwaves and laser. The EW system 110a, 110b comprises EW system interface means 104 adapted to co-operate with corresponding wind power plant interface means 103 comprised in a wind power plant 100, the EW system interface means 104 being adapted to provide transfer of at least one of communication and electric power between the EW system 110a, 110b and a wind power plant 100.

This means that the EW system may transmit at least one of jamming radio signals, high-power microwaves and laser towards target objects that have been deemed hostile, for example one or more UAVs (Unmanned Aerial Vehicles) 150 as illustrated. In this way, a so-called soft-kill may be performed.

By using the wind power plant 100 as a host for an EW system 110a, 110b, 110c and associated technical systems, wind power installations can become a strategic asset to a military defense, offering permanent installations for surveillance, detection and interception of threats. The wind power plant 100 is prepared for mounting of an EW system 110a, 110b; 110c, such that an EW system 110a, 110b, 110c can be mounted to the wind power plant 100 when, and if, deemed suitable. This means that all wind power plants which are prepared for mounting of an EW system 110a, 110b, 110c do not necessarily need to carry an EW system 110a, 110b; 110c.

A wind power plant 100 contains a number of different technical systems to control and maneuver the wind power plant 100 during its operation and maintenance. One or more power supply sources are present and can be used also for operation and maneuvering of the EW system 110a, 110b; 110c. This co-arrangement saves cost and reduces weight of a redundant energy supply arrangement.

According to some aspects, in Figure 1 there are three EW systems 110a, 110b; 110c, where these may constitute EW subsystems that together form an EW system 110a, 110b; 110c. Alternatively these may be independently operating EW systems 110a, 110b; 110c.

According to some aspects, the EW system 110a, 110b, 110c may thus be constituted by at least two separate parts 110a, 110b, 110c; 544 which are connected to each other. This means that the EW system may comprise several separate parts that can be distributed at the wind power plant 100, or even to different wind power plants 100, including under a sea level 210 in case of an off-shore wind power plant. According to some aspects, an off-shore wind power plant 100 comprises a foundation 220, floating or standing on the sea floor, that at least partly is positioned below the sea level 210. In Figure 1, the foundation 220 is shown floating, moored by means of a plurality of mooring cables 221 (only one referenced in Figure 1) in a previously well-known manner. Of course, the foundation 220 can be positioned standing on the sea floor, mainly depending on the present sea depth.

Under the sea level, there may be one or more underwater sensor devices 544, 564 such as for example acoustic sensor devices, Magnetic Anomaly Detectors (MAD) and electromagnetic sensor devices that are adapted to detect underwater activity, such as UUVs 151 (Unmanned Underwater Vehicles), and which may be a part of an underwater EW system or EW subsystem 110c. These sensor devices 544, 564 may also be individual parts that are comprised in an EW system 110a, 110b that is positioned above the sea-level 210, and can be positioned on the foundation 220 or in the vicinity and connected to the rest of the EW system, or the EW subsystem 110c as shown in Figure 1, by means of a cable 565 or via a wireless connection. In Figure 1 there is a first acoustic sensor device 544 mounted to the foundation 220 and a second acoustic sensor device 564 that is positioned under sea level 210 at a distance from the wind power plant 100 for example on the sea bottom or at a pole or buoy. Any sensor comprised in the EW system may be positioned at a pole or similar that extends out from the wind power plant 100, below or above sea level 210.

According to some aspects, acoustic sensor device 544, 564 comprise active sonar devices that are adapted to emit sound waves and listen for echoes to detect and locate objects underwater, as well as passive sonar devices that are adapted to listens for sounds emitted by other objects, such as submarines or ships, without emitting sound waves. Furthermore, Magnetic Anomaly Detectors (MAD) sensors are adapted to detect minute changes in the Earth's magnetic field caused by the presence of large metal objects like submarines, and electromagnetic sensors are adapted to detect electric fields generated by the movement of metallic objects in seawater, often used for mine detection and countermeasures.

The above are only examples of how an EW system may be arranged, and indicate that many other configuration of EW systems, EW subsystems and sensors are conceivable. EW sensors will be discussed more in detail later.

It should be understood that the above off-shore wind power plant 100 only is an example, the present disclosure is applicable for wind power plants that are positioned on land as well.

According to some aspects, the wind power plant 100 further comprises a plant communication unit 140 that is adapted for transfer of data to and from a remote server 430. According to some aspects, the plant communication unit 140 is connected to the wind power plant interface means 103, such that a connected EW system 110a, 110b, 110c can communicate with the remote server 430 via the plant communication unit 140.

According to some aspects, the wind power plant 100 further comprises a plant control unit 120 and a radar system 130 that is adapted to provide radar target data to the plant control unit 120, and according to some further aspects, the plant control unit arrangement 120 is adapted to control an EW system 110a, 110b, 110c in dependence of input data received from the radar system 130.

Suitably, the radar system 130 is positioned at an elevated position, such as at the wind power plant nacelle 101. Such an elevated and advanced position of the radar system 130 will make early detection possible and give extra time for decision making or an early response using the EW system 110, 110b, 110c. If an incoming threat calls for response, the EW system 110, 110b, 110c can be initiated. This can be performed manually, automatically or a combination of both.

The co-arrangement with the radar system 130 saves cost and reduces weight of a redundant energy supply arrangement. Reduced weight is beneficial since it reduces the need for reinforcement of the wind power plant nacelle 101 and the wind power plant tower 102.

The plant communication unit 140 is adapted for wireless and/or wired communication, for example via fiber. The plant control unit 120 may be arranged to communicate 410 with a cellular communication system 400 via the plant communication unit 140. This communication system may, e.g., be a third generation partnership program (3GPP) defined access network like the fourth generation (4G) or the fifth generation (5G) access networks. The access network may provide access to remote networks and other resources such as, e.g., the Internet. It is also appreciated that some processing functions may be performed by resources in a remote network 420, such as a remote server 430. Thus, functions of the control unit 120 may be performed remotely on, e.g., the remote server 430.

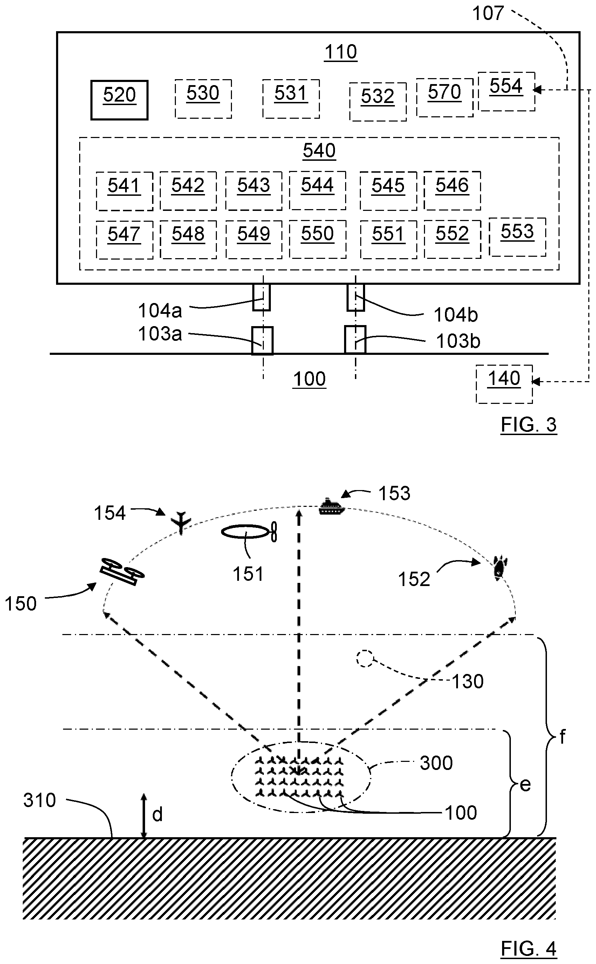

According to some aspects, as shown for an example EW system 110 in Figure 3, the EW system 110 further comprising a sensor system 540, where the sensor system 540 comprises at least one of Radar Warning Receiver (RWR) sensors 541, Electronic Support Measures (ESM) sensors 546, Infrared (IR) sensors 542, Laser Warning Receiver (LWR) sensors 543, Direction Finding (DF) system sensors 547, Synthetic Aperture Radar (SAR), LIDAR (Light detection and ranging), Communication Intelligence (COMINT) sensors 548, Signals Intelligence (SIGINT) sensors 549, acoustic sensors 544, Sonar, Sound navigation and ranging, cyber sensors 550, Electro-Optical/Infrared (EO/IR) sensors 551, Hyperspectral imaging sensors, passive radar sensors 545, Electronic Counter-Measure (ECM) sensors 552 and Electronic Counter-Counter-Measure (ECCM) sensors 553. The sensor system 540 is adapted to provide input to the system control unit 520. Seismic sensors are also conceivable.

More in detail, RWR sensors 541 are adapted to detect and identify radar emissions from other radar systems, providing early warning to aircraft or vehicles of potential threats. ESM sensors 547 are adapted to passively listen to electromagnetic signals in the environment, helping to identify and locate sources of radiofrequency emissions, such as radars, communication systems, or even electronic fuzes on munitions. IR sensors 542 are adapted to sensors detect the heat signatures of aircraft, missiles, and ground vehicles, and are used for tracking and targeting, as well as detecting infrared-guided missiles. LWR sensors 543 are adapted to detect laser energy directed at an aircraft or vehicle, providing a warning of laser-guided threats, such as laser rangefinders or target designators.

DF system sensors 547 are adapted to determine the direction of incoming electromagnetic signals, helping to locate the source of radiofrequency emissions. COMINT sensors 548 are adapted to intercept, analyze, and exploit communication signals, including voice, data, and message traffic. SIGINT sensors 549 are adapted to encompass a broader range of intelligence gathered from intercepted signals, including telemetry data, radar characteristics, and electronic signatures. The passive radar sensors 545 are adapted to exploit existing radiofrequency signals, such as TV or FM broadcasts, to detect and track targets without emitting detectable radar signals. Acoustic sensors 544 are adapted to naval warfare where hydrophones and sonar systems are used to detect underwater threats like submarines. In modern electronic warfare, cyber sensors 550 are used to detect and respond to cyberattacks on communication and computer systems. Electronic countermeasures, ECM, sensors 552 are adapted to detect, analyze and exploit signals from adversary systems such as e.g., UAV's and missiles to control the use of own electronic countermeasures such as e.g., jamming radio signals 530. Electronic counter-countermeasures ECCM, sensors 553 are adapted to detect, analyze and exploit signals from an adversary ECM system and control the use of own electronic counter-countermeasures. Hyperspectral imaging sensors are adapted to collect and process information from across the electromagnetic spectrum. Each object leaves a unique spectral signature that can be used for identification, making these sensors valuable for detecting camouflage, identifying materials, and assessing environmental conditions.

The EW system 110 can thus comprise and use a large variety of sensors, the above only constituting an example of suitable sensors.

According to some aspects, the system control unit 520 is adapted to control said means 530, 531, 532 based on the input from the sensor system 540. This means that said means can be directed and used in an accurate and efficient manner.

According to some aspects, said means 530, 531, 532 are adapted to counteract unmanned vehicles 150, 151, 152 by be being adapted to perform at least one of jamming by being adapted to emit radiofrequency signals on the same frequency as control signals or GNSS (Global Navigation Satellite System) signals of unmanned vehicles 150, GNSS Spoofing by being adapted to send predetermined GNSS signals to the unmanned vehicles, emission of Directed Energy Weapons (DEW), such as particle beam weapons, and emission of Radiofrequency, RF, the means including high-powered microwave (HPM) devices 531 that for example can be adapted to emit electromagnetic pulses. Instead of GNSS signals, other types of navigations signals can be jammed or controlled.

According to some aspects, as shown in Figure 2 and Figure 3, the EW system 110 comprises guiding means 570 that are adapted to guide one or more defense UAVs 270 that are launched from the wind power plant 100 and for example can be guided towards identified threats such as for example a hostile UAV 150. The defense UAVs 270 may comprise weapons of their own such as electronic warfare equipment and/or explosives, but may also only be used for hitting identified threats 150 and thus inflicting damage to these identified threats 150 by means of their own motion and weight. The UAVs above can be UCAVs (unmanned combat aerial vehicles).

According to some aspects, said means 530, 531, 532 are also adapted to counteract manned vehicles 153, 154 in manners similar or identical to the ones described above.

Examples of vehicles are unmanned vehicles such as for example UAVs 150, UUVs 151, missiles 152, and manned vehicles such as for example boats, ships 153 and aircraft 154 as illustrated in Figure 4.

In this context, HPM devices belonging to High-Power Electro Magnetic (HPEM) devices, where the power radiated by the HPM sources are in the range from a few KWs to tens of GWs (pulsed) in the frequency range from tens of MHz up to several GHz.

According to some aspects, the EW system 110; 110a, 110b, 110c comprises a system communication unit 554 that is adapted for transfer of data to and from a remote server 430. This means that the EW system 110; 110a, 110b, 110c can communicate directly with the remote server 430, and for example the system control unit arrangement 520 may be arranged to communicate 410 with a cellular communication system 400 via the system communication unit 540 in the same manner as the plant control unit 120.

The present disclosure also relates to a defense arrangement 106 comprising a wind power plant 100 as described herein and at least one EW system 110; 110a, 110b, 110c as described herein and being mounted to the wind power plant 100. The EW system 110; 110a, 110b, 110c may be mounted in many different ways, for example via a holding means on the wind power plant tower 102 or an elevated support structure on the wind power plant nacelle 101. The EW system 110 may be fixed by means of mounting means such as rivets and/ or welding. Magnetic holders are also conceivable.

By means of such a defense arrangement 106, wind power installations become strategic assets to the defense, offering permanent installations for surveillance, detection and interception of threats, with positions favorable for handling threats by means of one or more EW systems 110; 110a, 110b, 110c.

The co-location of wind power and EW systems helps solving the conflict of interest and instead creates synergies both in function as well as in lowering the total cost for upholding the functions of military defense and electricity production. The total cost for upholding both functions is reduced by sharing the same establishment, physical constructions, communication, and utility systems.

According to some aspects, the plant control unit 120 is adapted to communicate with the system control unit 520. This is for example enabled by means of the communication units 140, 554 as illustrated in Figure 3, where communication may be wireless 107 or transferred via corresponding communications connections 103a, 104a. In the case of wireless communication 107, the plant communication unit 140 is comprised in the wind power plant interface means, and the system communication unit 554 is comprised in the EW system interface means. According to some aspects, there may also be corresponding power connections 103b, 104b.

With reference to Figure 4, the present disclosure also relates to a defense system 300 comprising a plurality of defense arrangements 100 according to the above. Here, a plurality of wind power plants 100 are shown in a cluster that forms the defense system 300, and according to some aspects this cluster is positioned at sea, at a certain distance d from a shoreline 310. The defense arrangements 100 can of course be positioned on land as well. According to some aspects, the defense system also comprises at least one of said communication system 400, remote network 420, and remote server 430.

According to some aspects, an example of how the defense arrangement 100 and the defense system 300 could operate will be described in the following.

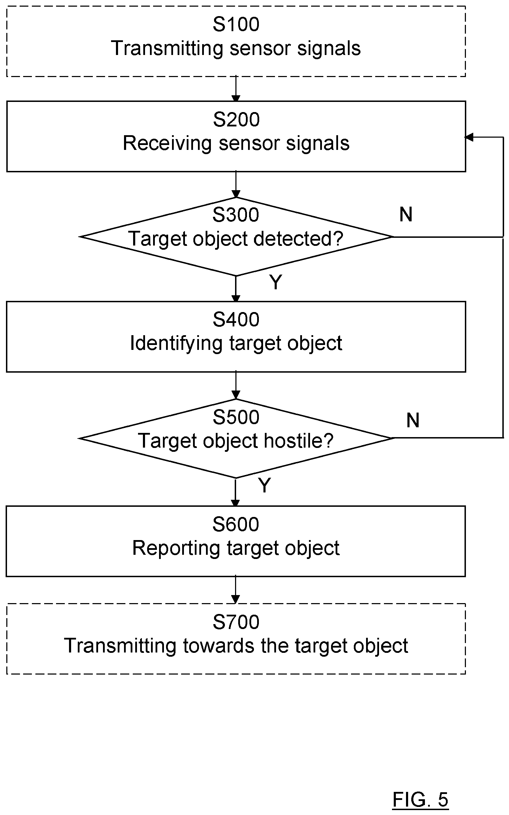

The radar system 130 is normally continuously monitoring incoming objects and feeding information to the plant control unit 120. There can be one or more radar systems 130 in a defense system 300 and the radar systems does not need to be mounted on a wind power plant nacelle 101 that carries an EW system 110 or even geographically close. For example, as shown in Figure 5, a remote radar system 130 can be placed at one location and communicate with one or more plant control unit 120 and/or system control units 520 at corresponding wind power plants 100 at a second location, remote from the first location. The remote radar system 130 is only schematically indicated in Figure 4 and can be implanted in many ways. For example, radar system 130 can be comprised in a wind power plant nacelle of a wind power plant that either can be alone or comprised in a further cluster of two or more wind power plants. There can be several remote radar systems 130.

This arrangement can be advantageous for example if it is desired to keep the EW system 110 within territorial waters e, where a state has full sovereignty, while using more geographically advanced areas as e.g. an exclusive economic zone f for the radar system 130. That would enable even earlier detection and possible countermeasures, without breaking the widespread practice to not place fixed weapons outside the territorial waters e.

At least one of the control units 120, 520 can according to some aspects be adjacent or remote and be adapted to support a combination of automated decision and manual decisions.

With reference to Figure 5, the present disclosure also relates to a method at a defense arrangement 106 as described herein. The method comprises receiving S200 sensor signals 132 from one or more target objects 150, and determining S300 if at least one target object 150 has been detected. If that is the case, the method comprises identifying S400 the target object 150, and determining S500 if the target object 150 is a hostile object. If that is the case, the method comprises reporting S600 the target object 150 to a remote server 430.

This means that sensor signals, for example radar signals or any other type or types of sensor signal, for example as described herein, are received and are indicative of one or more target objects 150. If the target object 150 is deemed to be a hostile object, the target object 150 is reported to a remote server 430. At the remote server 430, one or more persons may study the reported target object and determine if further actions are suitable, and if so, which further actions.

According to some aspects, the method further comprises transmitting S700 at least one of jamming radio signals, high-power microwaves and laser towards the target object 150. This man be initiated by said one or more persons, or may be an automatic action.

According to some aspects, the method further comprises transmitting S100 sensor signals 131. This is the case for active sensors, such as radar the radar system 130.

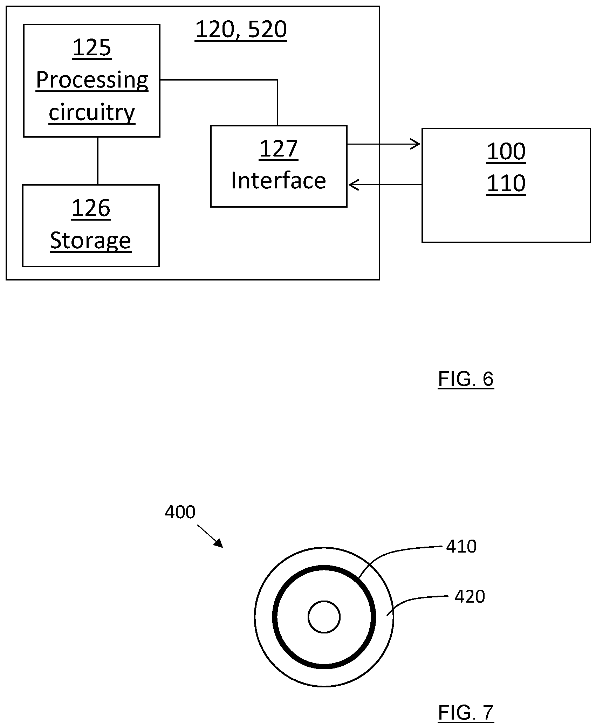

In Figure 6 it is schematically illustrated, in terms of a number of functional units, the components of the control unit arrangements 120, 520 according to embodiments of the discussions herein. Processing circuitry 125 is provided using any combination of one or more of a suitable central processing unit CPU, multiprocessor, microcontroller, digital signal processor DSP, etc., capable of executing software instructions stored in a computer program product, e.g. in the form of a storage medium 126. The processing circuitry 125 may further be provided as at least one application specific integrated circuit ASIC, or field programmable gate array FPGA. The processing circuitry thus comprises a plurality of digital logic components.

Particularly, the processing circuitry 125 is configured to cause the corresponding control unit arrangement 120, 410 to perform a set of operations, or steps to control the operation of the wind power plant including, but not being limited to, controlling the EW system 110. For example, the storage medium 126 may store the set of operations, and the processing circuitry 125 may be configured to retrieve the set of operations from the storage medium 126 to cause the corresponding control unit arrangement 120, 410 to perform the set of operations. The set of operations may be provided as a set of executable instructions. Thus, the processing circuitry 125 is thereby arranged to execute methods as herein disclosed.

The storage medium 126 may also comprise persistent storage, which, for example, can be any single one or combination of magnetic memory, optical memory, solid state memory or even remotely mounted memory.

According to some aspects, each control unit arrangement 120 further comprises an interface 127 for communications with at least one external device such as a control panel or an external device, for example the radar system 130, components of the EW system 110 and components of the wind power plant nacelle 101. As such the interface 127 may comprise one or more transmitters and receivers, comprising analogue and digital components and a suitable number of ports for wireline communication. The interface 127 can be adapted for communication with other devices, such as a server, a personal computer or smartphone. Examples of such wireless communication devices are Bluetooth^{®}, WiFi^{®} (IEEE802.11b), Global System Mobile (GSM) and LTE (Long Term Evolution), to name a few.

Figure 7 shows a computer program product 400 comprising computer executable instructions 410 stored on media 420 to execute any of the methods disclosed herein.

According to some aspects, the software necessary to control the EW system 110, the wind power plant 100 including the yaw rotation A4 and, if applicable, a wind turbine blade rotation A3, are fully integrated. According to some further aspects, in normal operation for energy generation, the civil personnel have only access to the civil parts of the installation to prevent misuse and/or accidents. In case the EW system 110 needs to be used, military authorized personnel can access the system and their control shall overrule any commands from civil personnel.

The present disclosure is not limited to the examples provided above, but may vary within the scope of the appended claims. For example, military use access and command will be disabled when a military operation using the EW system 110 is finalized, such that civil personnel are enabled to control the wind power plant 100 again. The wind power plant 100 is then restored to a normal mode to resume its function to produce electricity.

This provides a secure procedure to separate military and civil use of the defense arrangement 100.

According to some aspects, the defense arrangement 106 may additionally comprise physical counter-measure arrangements such as nets, metal foil parts (chaff), thermal decoys as flares and kinetic weapons. Many other types of such arrangements are of course conceivable.

According to some aspects, the EW system 110 is mainly adapted to be mounted on the wind power plant 100 and connected via the corresponding interface means 103, 104 as illustrated in Figure 2. Some parts of the EW system 110 may be detached from the wind power plant 100, such as for example the previously described second acoustic sensor device 564 that is positioned under sea level 210 at a distance from the wind power plant 100. Many other sensor types can be configured in this manner such as for example the previously mentioned MAD and electromagnetic sensors.

## Claims

1. A wind power plant (100) comprising a nacelle (101) and a wind power plant tower (102) onto which the nacelle (101) is mounted, **characterized in that** the wind power plant (100) comprises wind power plant interface means (103) adapted to co-operate with corresponding electronic warfare, EW, system interface means (104), comprised in an EW system (110; 110a, 110b, 110c), the wind power plant interface means (103) being adapted to provide transfer of at least one of communication and electric power between the wind power plant (100) and an EW system (110; 110a, 110b, 110c).

2. The wind power plant (100) according to claim 1, further comprising a plant communication unit (140) that is adapted for transfer of data to and from a remote server (430).

3. The wind power plant (100) according to any one of the claims 1 or 2, further comprising a plant control unit (120) and a radar system (130) that is adapted to provide radar target data to the plant control unit (120).

4. An electronic warfare, EW, system (110; 110a, 110b; 110c) comprising a system control unit (520) and means (530, 531, 532) for transmitting at least one of jamming radio signals, high-power microwaves and laser, **characterized in that** the EW system (110a, 110b) comprises EW system interface means (104) adapted to co-operate with corresponding wind power plant interface means (103) comprised in a wind power plant (100), the EW system interface means (104) being adapted to provide transfer of at least one of communication and electric power between the EW system (110a, 110b) and a wind power plant (100).

5. The EW system (110; 110a, 110b; 110c) according to claim 4, further comprising a sensor system (540), where the sensor system (540) comprises at least one of
Radar Warning Receiver, RWR, sensors (541)
Electronic Support Measures, ESM, sensors (546)
Infrared, IR, sensors (542),
Laser Warning Receiver, LWR, sensors (543),
Direction Finding, DF, system sensors (547),
Synthetic Aperture Radar (SAR)
Lidar, Light detection and ranging
Communication Intelligence, COMINT, sensors (548),
Signals Intelligence, SIGINT, sensors (549),
acoustic sensors (544, 564),
Sonar, Sound navigation and ranging
cyber sensors (550),
Electro-Optical/Infrared, EO/IR, sensors (551),
Hyperspectral imaging sensors
passive radar sensors (545),
Magnetic Anomaly Detectors, MAD,
electromagnetic sensor devices
Electronic counter-measures, ECM, sensors (552), and
Electronic counter-counter-measures ECCM, sensors (553),
where the sensor system (540) is adapted to provide input to the system control unit (520)

6. The EW system (110; 110a, 110b, 110c according to claim any one of the claims 4 or 5, wherein the system control unit (520) is adapted to control said means (530, 531, 532) based on the input from the sensor system (540).

7. The EW system (110; 110a, 110b; 110c) according to any one of the claims 4-6, wherein said means (530, 531, 532) are adapted to counteract unmanned vehicles (150, 151, 152) and/or manned vehicles (153, 154) by being adapted to perform at least one of
jamming by being adapted to emit radiofrequency signals on the same frequency as control signals or Global Navigation Satellite System, GNSS, signals of unmanned vehicles (150),
GNSS Spoofing by being adapted to send predetermined GNSS signals to the unmanned vehicles,
emission of Directed Energy Weapons, DEW, and
emission of Radiofrequency, RF, the means including high-powered microwave, HPM, devices (531).

8. The EW system (110; 110a, 110b; 110c) according to any one of the claims 4-7, wherein the EW system (110; 110a, 110b; 110c) is constituted by at least two separate parts (110a, 110b, 544) which are connected to each other.

9. The EW system (110; 110a, 110b; 110c) according to any one of the claims 4-8, wherein the EW system (110; 110a, 110b; 110c) comprises a system communication unit (554) that is adapted for transfer of data to and from a remote server (430).

10. A defense arrangement (106) comprising a wind power plant (100) according to any one of the claims 1-3 and at least one EW system (110; 110a, 110b; 110c) according to any one of the claims 4-9 that is mounted to the wind power plant (100).

11. The defense arrangement (106) according to claim 10, wherein the plant control unit (120) is adapted to communicate with the system control unit (520).

12. The defense arrangement (106) according to any one of the claims 10 or 11, wherein the wind power plant (100) comprises a radar system (130) that is adapted to provide radar target data to the plant control unit (120), where the plant control unit arrangement (120) is adapted to provide the system control unit (520) with corresponding radar target data.

13. The defense arrangement (106) according to any one of the claims 10-12, wherein the EW system (110) comprises guiding means (570) that are adapted to guide one or more defense UAVs (270) that are launched from the wind power plant (100).

14. A defense system (300) comprising a plurality of defense arrangements (100) according to any one of the claims 10-13.

15. A method at a defense arrangement (106) according to any one of the claims 10-13, the method comprising
receiving (S200) sensor signals (132) from one or more target objects (150);
determining (S300) if at least one target object (150) has been detected; and if that is the case
identifying (S400) the target object (150); and
determining (S500) if the target object (150) is a hostile object; and if that is the case
reporting (S600) the target object (150) to a remote server (430).
